(19) **Europäisches Patentamt / European Patent Office / Office européen des brevets**

(11) **EP 3 015 828 B1**

(12) **EUROPEAN PATENT SPECIFICATION**

(45) Date of publication and mention
of the grant of the patent:
**28.09.2016 Bulletin 2016/39**

(51) Int Cl.:
***G01D 5/34*** *(2006.01)*       ***G01D 5/347*** *(2006.01)*
***G01D 5/28*** *(2006.01)*       ***G01D 5/30*** *(2006.01)*

(21) Application number: **14382426.6**

(22) Date of filing: **30.10.2014**

(54) **Optoelectronic device and method thereof**

Optoelektronische Vorrichtung und Verfahren dafür

Dispositif optoélectronique et procédé associé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2016 Bulletin 2016/18**

(73) Proprietor: **Fagor, S. Coop.
20500 Arrasate-Mondragon (ES)**

(72) Inventors:
 • **Morlanes Calvo, Tomás
   01012 Vitoria-Gasteiz (ES)**

 • **De La Peña Azarola, José Luis
   39005 Santander (ES)**

(74) Representative: **Igartua, Ismael
   Galbaian S.Coop.
   Polo de Innovación Garaia
   Goiru Kalea 1 - P.O. Box 213
   20500 Arrasate-Mondragón (ES)**

(56) References cited:
   **EP-A2- 2 511 669       WO-A1-2008/053184
   US-A1- 2003 160 966       US-A1- 2013 258 352
   US-B2- 7 102 760**

**Description**

TECHNICAL FIELD

The present invention relates to an optoelectronic device for measuring linear displacements and to an associated method for determining at least one angle of rotation.

PRIOR ART

Optoelectronic devices for measuring linear displacements comprise two elements which are displaced with respect to one another in a linear direction of measurement, and the device is configured for determining relative displacement between both elements. The elements are a scale, which is usually fixed to a surface of a machine and remains fixed, and a read head that is arranged at a specific separation distance with respect to the scale and is linearly displaced in the direction of measurement with respect to the scale, scanning it with optical means. The scale comprises an incremental track made up of successive partial zones having different reflecting properties and distributed in the direction of measurement with a specific period, and as a result of the optical scan conducted on it by the read head, as said read head is displaced in the direction of measurement periodic electrical signals (dependent on the period of the scale) which can be used to determine the relative displacement between both elements are generated. Two quadrature signals, with their corresponding negative signals, are usually generated, and displacement is determined according to the flanks of at least one of said signals. Measurement precision depends on the number of flanks of said signals taken into account and on the period of the successive partial zones of the scale having different reflecting properties.

Some devices further comprise at least one reference index in the scale, such that relative displacement of both elements can be determined by using the position in which the reference index is detected as a reference position. An example of such devices is disclosed in document EP1775558A1, for example.

In other devices, such as the device disclosed in document EP2199752A1, for example, an additional track parallel to the scale is used instead of a reference index. This parallel track is formed by successive partial zones having different reflecting properties forming a pseudo-random code. The absolute position of one of the elements with respect to the other can further be determined at all times as a result of the additional track.

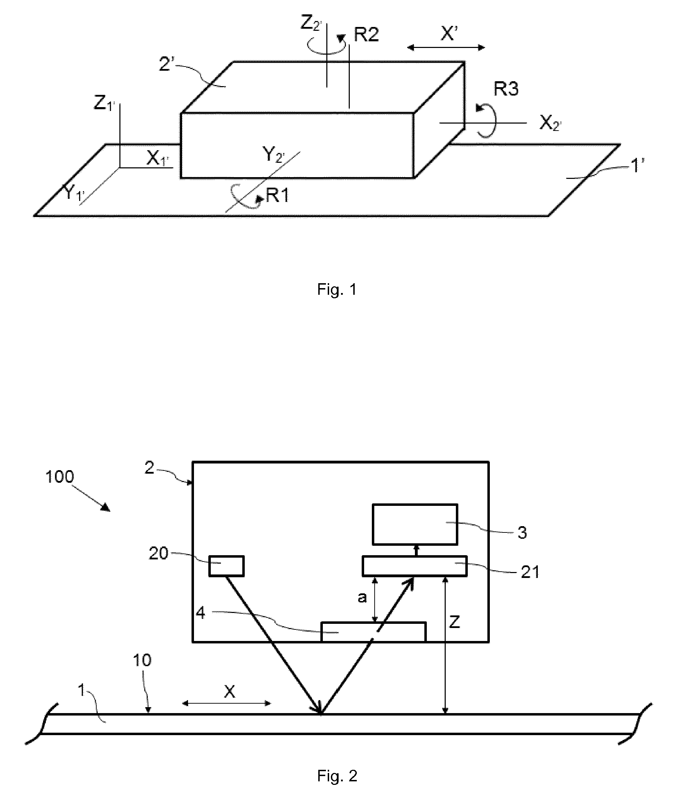

For such devices, both elements are ideally parallel to one another both in the installation and during relative displacement of the two elements. In practice, this is not usually the case because one element can rotate or be rotated with respect to the other element. By way of example, Figure 1 depicts the coordinate axes $X_{1'}$, $Y_{1'}$ and $Z_{1'}$ of a fixed first element 1' and the coordinate axes $X_{2'}$, $Y_{2'}$ and $Z_{2'}$ of a second element 2' that is displaceable with respect to the first element 1', both elements being parallel, and possible rotations R1 (pitch), R2 (yaw) and R3 (roll) of said second element 2' with respect to the coordinate axes $X_{2'}$, $Y_{2'}$ and $Z_{2'}$ are depicted on said coordinate axes $X_{2'}$, $Y_{2'}$ and $Z_{2'}$ of the second element 2', which would result in a loss of parallelism between both elements 1' and 2'. When there is rotation R1, R2 or R3 of the second element 2' with respect to any of the coordinate axes $X_{2'}$, $Y_{2'}$ and $Z_{2'}$ (and it is therefore rotated with respect to the first element 1'), there is angular deviation of said second element 2 in the corresponding direction with respect to the position which both parallel elements 1' and 2' would be in, and said deviation is quantified by means of a corresponding angle of rotation: pitch angle for rotation R1, yaw angle for rotation R2 and roll angle for rotation R3. Rotations R1, R2 and R3, particularly rotations R1 and R2, can give rise to erroneous position measurements in the direction of displacement X', so the determination of at least one angle of rotation can be used to correct position measurements obtained in the direction of measurement X and therefore prevent possible errors due to the corresponding rotation.

Document EP1271107A1 discloses a device that at least partially solves this problem because it proposes a way to detect and quantify the pitch (the angle of rotation associated with rotation R1 shown in Figure 1, i.e., pitch angle). The scale of the described device comprises an incremental track with successive partial zones having different reflecting properties distributed in the direction of measurement defining two clearly distinguished periods, giving rise to two different scanning signals as the read head is displaced. Each scanning signal is part of a measuring system, and this document proposes comparing the scanning signals obtained with two different measuring systems to detect and quantify the pitch and thus be able to correct it.

DISCLOSURE OF THE INVENTION

The object of the invention is to provide an optoelectronic device for measuring linear displacement and a method thereof, as defined in the claims.

A first aspect of the invention relates to an optoelectronic device for measuring linear displacement comprising a first element, a second element that is linearly displaceable in a direction of measurement with respect to the first element, and control means for determining the position of one of the elements with respect to the other element. The second element comprises emission means for illuminating a specular reflective surface of the first element and a receiving area for receiving at least part of the light reflected off the specular reflective surface, specular reflective surface being interpreted as that surface with the capacity to reflect at least part of the light it receives in a specular manner.

The device of the invention further comprises a window that is arranged in the light path between the emission means and the receiving area, and comprising a disturbance area with successive partial zones having different light transmission properties distributed in the direction of measurement. The control means are adapted for comparing a light intensity distribution generated in the receiving area from the light reaching the receiving area after being reflected off the reflective surface, and after passing through the disturbance area of the window, with a predetermined light intensity distribution pattern, as well as for determining the pitch angle between both elements according to the result of said comparison. The determination of the pitch angle allows correcting the dimension of the relative position of both elements in the direction of measurement, for example, at least as regards the possible error generated in the dimension due to the presence of pitch.

Therefore as a result of the window and the disturbance area thereof, a single light intensity distribution reflected off a specular reflective surface is enough for determining the magnitude of the pitch between both elements of the device (the pitch angle, which is the angle of rotation associated with rotation R1 shown in Figure 1), said reflective surface having to meet the sole condition of having a specular reflecting capacity, so any surface of the first element which can reflect light in a specular manner can be used as a reflective surface for determining the pitch angle between both elements. Furthermore, upon comparing two light intensity distributions (two "images"), the pitch can also be determined in a static manner, without needing to displace one element with respect to the other for that purpose, which can be advantageous when assembling the device, for example, because the magnitude of the pitch can be detected during this assembly in a rapid and simple manner in order to correct it if needed (correction of the assembly or of the specific position during device operation).

A second aspect of the invention relates to a method for determining at least one angle of rotation for an optoelectronic device used for measuring linear displacements between two elements that are linearly displaced with respect to one another. The device comprises a first element, a second element that is linearly displaceable in a direction of measurement in relation to the first element, and control means for determining the relative position between both elements. In the method, a reflective surface of the first element is illuminated from emission means of the second element, at least part of the reflected light being received in a receiving area of said second element. Furthermore, the light used for illuminating the reflective surface is made to pass through a window comprising a disturbance area with successive partial zones having different light transmission properties before reaching the receiving area. After having disturbed said light, the resulting light intensity distribution generated in the receiving area is compared with a predetermined light intensity distribution pattern, and the pitch angle between both elements is determined according to the result of said comparison, obtaining at least the advantages discussed above for the first aspect of the invention.

These and other advantages and features of the invention will become evident in view of the drawings and the detailed description of the invention.

DESCRIPTION OF THE DRAWINGS

Figure 1 shows the rotations that an element which is linearly displaced with respect to another element in an optoelectronic device for measuring linear displacements can have.

Figure 2 schematically shows an embodiment of the optoelectronic device of the invention.

Figure 3 shows the device of Figure 2, the second element having a pitch angle with respect to the first element.

Figure 4 is a partial plan view of a window of an embodiment of the device of the invention.

Figure 5 is a plan view of the first element of a first preferred embodiment of the device of the invention.

Figure 6 is a plan view of the first element of a second preferred embodiment of the device of the invention.

Figure 7 is a plan view of the first element of Figure 6 together with the second element aligned with respect to said first element.

Figure 8 is a plan view of the first element of Figure 6 together with the second element with a yaw angle with respect to the first element.

Figure 9a is a superimposition of the devices shown in Figures 2 and 3.

Figure 9b is a graphic depiction of the light path in the superimposed devices of Figure 9a.

Figure 10 shows the comparison made in one embodiment of the device of the invention of two periodic signals representative of two light intensity distributions in response to the presence of a pitch angle between the second element and the first element.

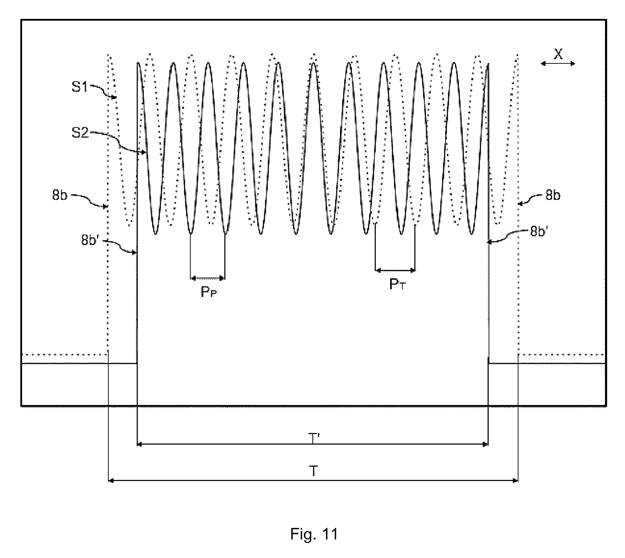

Figure 11 shows the comparison made in one embodiment of the device of the invention of two periodic signals representative of two light intensity distributions in response to the absence of a pitch angle between the second element and the first element, and in response to a deviation of the working distance with respect to the nominal working distance.

DETAILED DISCLOSURE OF THE INVENTION

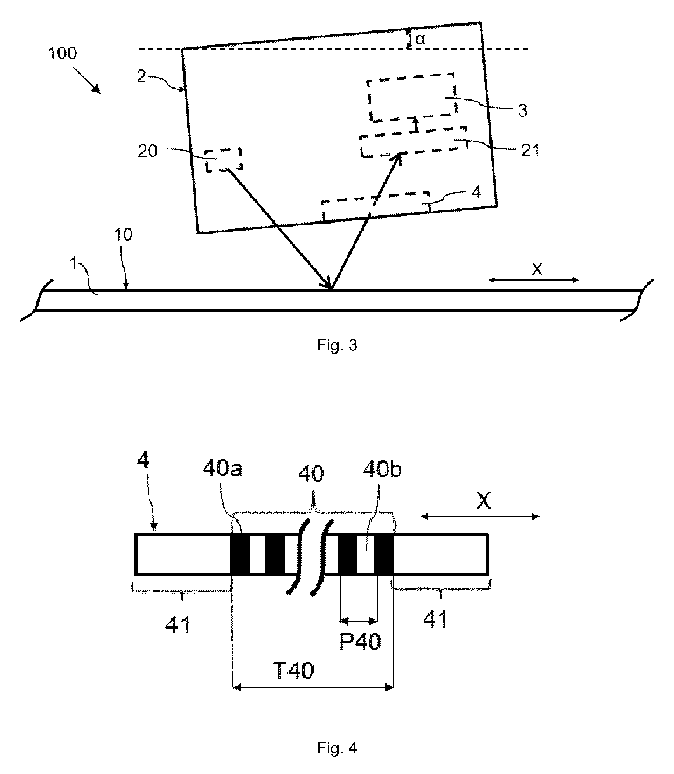

A first aspect of the invention relates to a device 100 for measuring linear displacements such as that shown by way of example in Figures 2 and 3. The device 100 comprises a first element 1, a second element 2 that is linearly displaceable in a direction of measurement X with respect to the first element 1, and control means 3 for determining the relative displacement between both elements 1 and 2, and it is furthermore adapted for determining the pitch angle $\alpha$ between both elements 1 and 2 depicted by way of example in Figure 3, the pitch angle $\alpha$ being one of the possible angles of rotation discussed above (specifically, with the angle of rotation associated with rotation R1 shown in Figure 1). Therefore said pitch angle $\alpha$ can be taken into account when calculating the relative position of both elements 1 and 2 in the direction of measurement X to suitably correct said position (the value of said position). The pitch angle $\alpha$ reflects the magnitude of rotation R1 between both elements 1 and 2.

In such devices 100, the second element 2 is a read head, and the first element 1 can be a static part of a machine, for example, on which at least one read track that will be discussed further below is arranged.

The second element 2 comprises emission means 20 illuminating a specular reflective surface 10 of the first element 1, preferably with divergent light, and a receiving area 21 for receiving at least part of the light that is reflected off the reflective surface 10 in a specular manner, specular reflective surface 10 being interpreted as that surface producing specular reflection of at least part of the light it receives. The device 100 further comprises a window 4 that is arranged in the light path from the emission means 20 to the receiving area 21. The window 4 comprises a disturbance area 40 with successive partial zones having different light transmission properties distributed in the direction of measurement X (zones 40a preventing light transmission and zones 40b allowing light transmission), as shown by way of example in Figure 4. Light which is emitted for illuminating the reflective surface 10 therefore reaches the receiving area 21 after having been disturbed by the disturbance area 40 of the window 4 (before or after being reflected off the reflective surface 10, according to where the window 4 is arranged), and a light intensity distribution reflected by the disturbance area 40 is consequently generated in the receiving area 21. The control means 3 use said light intensity distribution for determining the pitch angle $\alpha$ between elements 1 and 2, such that the device 100 of the invention allows performing said determination as a result of the presence of the window 4 and the processing of the light passing through said window 4. Zones 40a and 40b can be periodically distributed in the direction of measurement X with a specific period P40, although this is not an indispensable requirement. The window 4 is displaced integrally with the second element 2 and is preferably integrated in said second element 2, being part of it. Furthermore, the window 4 is preferably oriented the same way the receiving area 21 is in the direction of measurement X, said window 4 being affected by the pitch the same way said receiving area 21 is, and therefore the way the second element 2 is.

The device 100 comprises detection means in the receiving area 21 of the second element 2 which transform the received light (light intensity distribution) into a format that is compatible with the control means 3, such that the control means 3 are capable of processing the light intensity distribution as a result of said transformation. The detection means preferably comprise photodetectors for transforming the received light into at least one electrical signal, although said detection means could comprise other means. The detection means further comprise as many photodetector modules as needed to generate the required electrical signals. For example, if the device 100 comprises two parallel read tracks, the detection means comprise two different photodetector modules (one for each read track), having two measuring systems (each of them consisting at least of the emission means 20, a read track and the photodetector module associated with said read track).

The control means 3 compare the light intensity distribution generated in the receiving area 21 with a predetermined light intensity distribution pattern (in a format that is compatible with the control means 3) and determine the pitch angle $\alpha$ between both elements 1 and 2 according to the result of said comparison. The light intensity distribution pattern is previously generated and is the desired light intensity distribution (usually with an absence of pitch between the two elements 1 and 2, and with the receiving area 21 arranged at a specific nominal working distance with respect to the reflective surface 10), so upon making said comparison the pitch angle $\alpha$ is determined in a simple manner (if both distributions coincide, pitch angle $\alpha$ would be zero and there would be no pitch between the two elements).

The first element 1 preferably comprises at least one read track further serving as a specular reflective surface 10. The read track comprises successive partial zones having different specular light reflecting properties distributed in the direction of measurement X and the read track is illuminated by emission means 20. The light reflected off the read track reaches the receiving area 21 where it has a light intensity distribution, and said distribution is used for determining the position between elements 1 and 2, for example (relative position and/or absolute position, whichever is appropriate). The detection means generate at least one electrical signal in response to said distribution which is used for determining the position between both elements 1 and 2, and in any preferred embodiment of the invention said distribution is furthermore used for determining the pitch angle $\alpha$ between both elements 1 and 2, comparing it with the light intensity distribution pattern. In other embodiments, the reflective surface 10 can be any other part of the first element facing the emission means 20, provided that it meets the requirement of reflecting at least part of the light it receives in a specular manner. Therefore, it is possible to use in any preferred embodiment one and the same emitting unit of the emission means 20 for illuminating the read track and the reflective surface 10, and one and the same photodetector module for transforming the light intensity distribution both for determining the position and for determining the pitch angle $\alpha$ between elements 1 and 2, which allows providing a more compact and more economical device 100.

Since one and the same photodetector module is shared for two different functions, in the embodiments in which the read track further serves as a reflective surface 10, the disturbance area 40 partially covers the length of the window 4 in the direction of measurement X, allowing the passage of light without disturbance through the window 4 through at least one transmission area 41 not belonging to the disturbance area 40. The light intensity distribution generated in the receiving area 21 from the light illuminating the read track and passing through the window 4 can therefore comprise a first segment T from the light passing through the disturbance area 40 and at least a second segment from the light passing through the transmission area 41, segment T being used for determining the pitch angle $\alpha$ between elements 1 and 2 and at least the second segment being used for determining the position between elements 1 and 2.

The disturbance area 40 is preferably centered in the direction of measurement X in the window 4, as shown by way of example in Figure 4, said window 4 comprising a transmission area 41 on each side of the disturbance area 40, although the disturbance area 40 could be arranged in another position in the window 4.

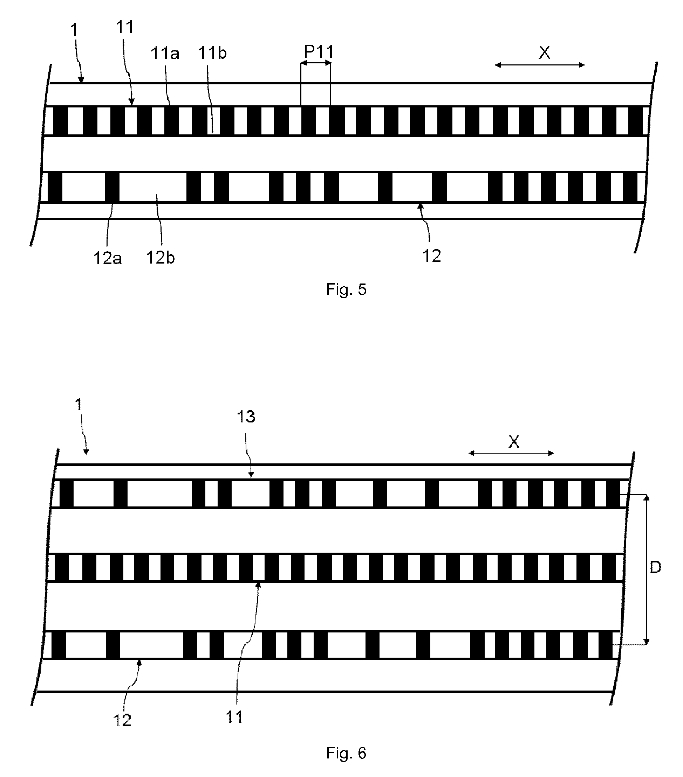

In a first preferred embodiment of the device 100, the first element 1 comprises a first read track that is an incremental track 11 comprising successive partial zones 11 a and 11b having different light reflecting properties periodically distributed in the direction of measurement X, and a second read track that is an absolute track 12 comprising successive partial zones 12a and 12b having different light reflecting properties distributed such that they define a pseudo-random code along the direction of measurement X which is parallel to the incremental track 11 in the forward direction X, as shown by way of example in Figure 5.

Zones 11 a and 11 b of the incremental track 11 are distributed with a specific period P11 in the direction of measurement X. The light reflected off the incremental track 11 reaches the receiving area 21 where a light intensity distribution is generated, and the detection means arranged in the receiving area 21 comprise a photodetector module for generating at least one periodic electrical signal in response to said light intensity distribution, this periodic electrical signal being used for determining the relative displacement of elements 1 and 2. The period of this electrical signal depends on the distribution period P11 of zones 11 a and 11 b of the incremental track 11. Two electrical quadrature signals, with their corresponding negative signals, are usually generated, and relative displacement is determined according to the flanks of at least one of said electrical signals. Measurement precision depends on the number of flanks of said electrical signals taken into account and on the period P11. The absolute track 12 is used for determining the absolute position of the second element 2. The emission means 20 comprise an emitting unit for illuminating the absolute track 12 (preferably different from the emitting unit for illuminating the incremental track 11), and the detection means comprise a photodetector module for processing the light intensity distribution it receives reflected off the absolute track 12 (different from the photodetector module for treating the light reflected off the incremental track 11). The control means 3 are adapted for determining the relative and absolute positions of elements 1 and 2 according to the light intensity distribution generated in the receiving area 21 after being reflected off the incremental track 11 and the absolute track 12, respectively.

In the first preferred embodiment, the absolute track 12 further serves as specular reflective surface 10 for determining the pitch angle $\alpha$.

In a second preferred embodiment of the device 100 shown in Figures 6 to 8, the first element 1 is similar to that of the first preferred embodiment, but it further comprises a third read track. The third read track is an additional absolute track 13 parallel to the absolute track 12 and the incremental track 11 in the direction of measurement X, and comprising successive partial zones having different light reflecting properties distributed such that they define a pseudo-random code along the direction of measurement X, the incremental track 11 being arranged between both absolute tracks 12 and 13, as shown by way of example in Figure 6. In the second preferred embodiment, one of the absolute tracks 12 or 13 further serves as a reflective surface 10.

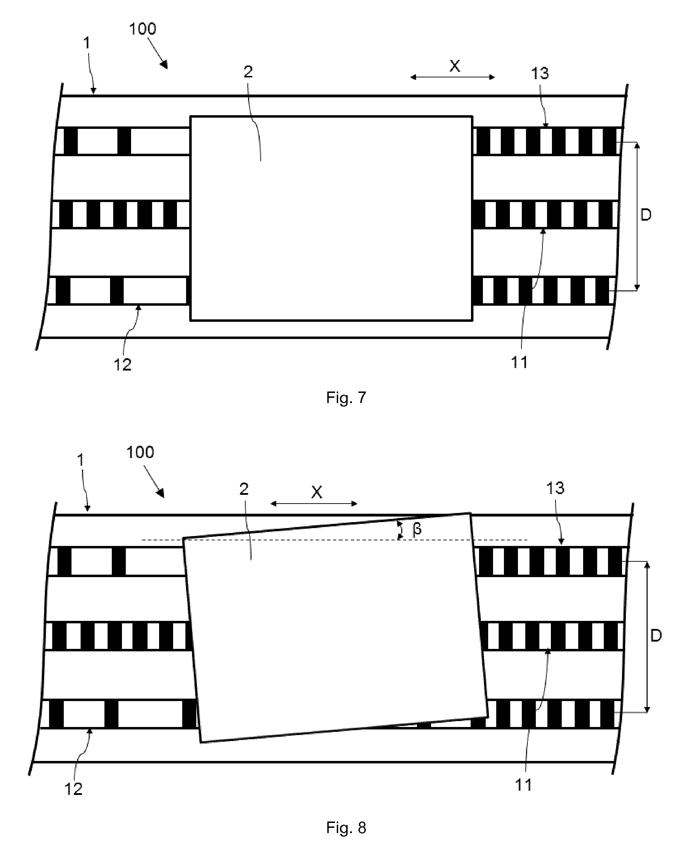

In the second preferred embodiment, the control means 3 are also adapted for comparing with one another the two light intensity distributions generated in the receiving area 21 from the light illuminating the absolute track 12 and the additional absolute track 13, respectively, as well as for determining the yaw angle $\beta$ between the first element 1 and the second element 2 according to the result of said comparison. The yaw angle $\beta$ reflects the magnitude of rotation R2 depicted in Figure 1, and Figures 7 and 8 show two plan assemblies of the device 100 to show this rotation R2: in the assembly depicted in Figure 7 there is no rotation R2 between elements 1 and 2 (the yaw angle $\beta$ is equal to zero), whereas in the assembly depicted in Figure 8 there is rotation R2 between both elements 1 and 2 (the yaw angle $\beta$ is not zero).

In other embodiments of the device 100 of the invention not shown in the drawings, the first element 1 comprises a read track and a specular reflective surface 10 that does not coincide with the read track. The read track can be an incremental track or an absolute track as described above, or there can be more than one read track.

A second aspect of the invention relates to a method for determining at least one angle of rotation for an optoelectronic device that is used for measuring linear displacements between two elements 1 and 2 that are linearly displaced with respect to one another. The method is adapted for being implemented in an optoelectronic device 100 for measuring linear displacements, comprising a first element 1, a second element 2 that is linearly displaceable in relation to the first element 1 in a direction of measurement X, and control means 3 for determining the relative displacement of both elements 1 and 2, and at least one angle of rotation.

The second element 2 comprises emission means 20 illuminating a specular reflective surface 10 of the first element 1 and a receiving area 21 for receiving at least part of the light reflected off the reflective surface 10. The device 100 further comprises a window 4 that is arranged in the light path from the emission means 20 to the receiving area 21. The window 4 comprises a disturbance area 40 with successive partial zones having different light transmission properties distributed in the direction of measurement X (zones 40a preventing light transmission and zones 40b allowing light transmission), as shown by way of example in Figure 4. Light which is emitted for illuminating the reflective surface 10 therefore reaches the receiving area 21 after having been disturbed by the disturbance area 40 of the window 4, and a light intensity distribution reflected by the disturbance area 40 is consequently generated in the receiving area 21. The control means 3 use said light intensity distribution for determining the pitch angle $\alpha$ between elements 1 and 2. Zones 40a and 40b can be periodically distributed in the direction of measurement X with a specific period P40, although this is not an indispensable requirement.

In any of its embodiments, the method is adapted for determining the pitch angle $\alpha$ between both elements 1 and 2 depicted by way of example in Figure 3. As discussed above, the pitch angle $\alpha$ indicates the magnitude of a pitch (angle of rotation associated with rotation R1 shown in Figure 1) between elements 1 and 2, such that said pitch angle $\alpha$ can be taken into account when calculating the position of both elements 1 and 2 in the direction of measurement X to suitably correct said position (the dimension of said position).

The method 100 can be implemented in a device 100 such as the device of the first aspect of the invention, in any of its embodiments and configurations, and can comprise different embodiments according to the embodiment of the device 100 where it is going to be implemented, so in some embodiments the method can furthermore be adapted for determining the working distance Z between the receiving area 21 of the second element 2 and the reflective surface 10 (or the deviation of the working distance Z with respect to the nominal working distance explained above) and/or for determining the yaw angle $\beta$ between both elements 1 and 2 of the device.

In the method, in any of its embodiments, the reflective surface 10 of the first element 1 is illuminated, the light used for illuminating the reflective surface 10 is caused to pass through the window 4 with the disturbance area 40, the light intensity distribution generated in the receiving area 21 from said light is compared with the light intensity distribution pattern, and the pitch angle $\alpha$ between both elements 1 and 2 is determined according to the result of said comparison. The control means 3 preferably determine displacement S in the direction of measurement X of the light intensity distribution with respect to the light intensity distribution pattern by comparing both distributions to one another, and they determine pitch angle $\alpha$ according to the value of displacement by applying, for example, the following equation:

$$S = Z^*tg\,(2\alpha). \qquad\qquad [1]$$

wherein:

- S: displacement between both light intensity distributions detected by the control means 3.
- Z: working distance between the reflective surface 10 and the receiving area 21.

- α: pitch angle.

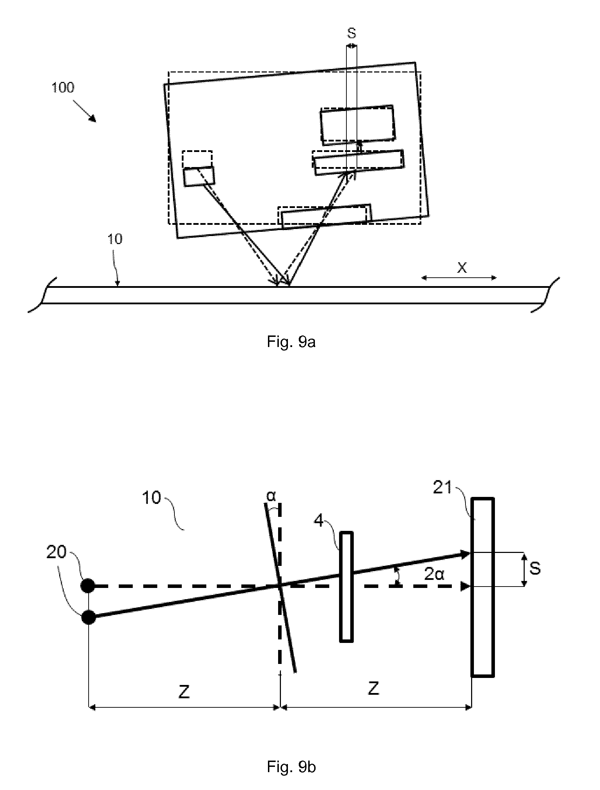

By way of example, Figures 9a and 9b schematically show the origin of equation [1]. Said drawings simultaneously show a non-pitch situation (dashed lines) and a pitch situation (continuous lines), Figure 9b being a graphic depiction of the light path in the superimposed devices of Figure 9a in a way that helps understand the phenomenon.

For determining the displacement S in the direction of measurement X of the light intensity distribution with respect to the light intensity distribution pattern, specific positions in said distributions can be taken into account, such as for example, a respective edge 8b and 8b' of segments T and T' of said light intensity distributions.

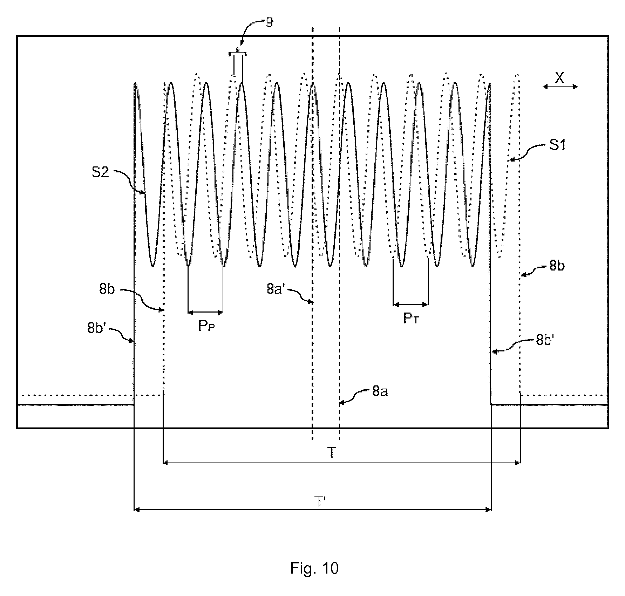

In one embodiment, the method is adapted for being implemented in devices 100 with windows 4 comprising a disturbance area 40 with partial zones 40a and 40b distributed with a specific period P40 in the direction of measurement X. The segment T in the direction of measurement X of the light intensity distribution generated from the light passing through the disturbance area 40 of the window 4 comprises a periodic behavior with a specific period $P_T$ depending on said period P40, as discussed above. For this case, the specific light intensity distribution pattern comprises a segment T' in the direction of measurement X that is the same length as segment T of the generated light intensity distribution (if the working distance Z is the same as the nominal working distance, as discussed below) and with a predetermined period $P_P$. In the method the phase of both distributions is compared and the pitch angle α is determined according to the detected phase difference 9. An electrical signal S1 is in turn generated from the generated light intensity distribution, comprising for this case a segment T with a periodic behavior with period $P_T$, as shown by way of example in Figure 10, and another electrical signal S2 can also be used to represent the light intensity distribution, comprising for this case a segment T' with a periodic behavior with period $P_P$. In reference to Figure 10, electrical signals S1 and S2 are out of phase with one another, and the value of the phase difference 9 is indicative of the pitch between elements 1 and 2, and therefore of the pitch angle α. The period P40 is selected so that period $P_T$ does not coincide with the period of any other segment of one and the same light intensity distribution generated in the receiving area 21 having a periodic behavior (for example, with the period of the light intensity distribution generated from reflection off the incremental track 11 when said incremental track 11 serves as a reflective surface 10).

The installer can determine the working distance Z upon installing the device 100 (the working distance is the physical distance existing between the first element 1 and the receiving area 21), but with the method, as a result of the window 4, and particularly its disturbance area 40, said working distance Z (or the deviation with respect to the nominal working distance) can be determined in a more accurate manner (considering that the light illuminating the reflective surface 10 is not collimated).

In any of the preferred embodiments, zones 40a and 40b of the disturbance area 40 are distributed periodically with a period P40. The light intensity distribution generated in the receiving area 21 from the light reflected off the reflective surface 10 and passing through the window 4 therefore has a periodic behavior (particularly the segment T resulting from the light passing through the disturbance area 40), with a period $P_T$. The control means 3 are adapted for determining the working distance Z according to the value of said period $P_T$, and for that purpose they can apply, for example, the following equation:

$$Z = (a/2)*(1 - P40/P_T)^{-1}. \qquad\qquad [2]$$

wherein:

- $P_T$: Period of the light intensity distribution generated in the receiving area 21 in segment T.
- P40: Distribution period of zones 40a and 40b of the disturbance area 40 of the window 4.
- a: Distance between the window 4 and the receiving area 21.
- Z: Working distance.

Detection of the working distance Z (or its deviation with respect to the nominal working distance) allows adjusting, if needed, the position of the second element 2 with respect to the first element 1.

The light intensity distribution pattern also comprises at least one segment T' with a periodic behavior (with a specific period $P_P$). By comparing both periods $P_T$ and $P_P$, the control means 3 could also determine the deviation of the working distance Z with respect to the nominal working distance. To that end, applying equation [2] with respect to the light intensity distribution pattern would be enough to obtain the nominal working distance and compare both specific working distances, for example.

The working distance Z could also be determined taking into account the ratio between the length T40 of the disturbance area 40 and the length of segment T of the generated light intensity distribution and the ratio between the length T40 of the disturbance area 40 and the length of segment T' of the light intensity distribution pattern. Two factors are obtained by dividing length T40 by the length of segment T and by dividing length T40 by segment T' of the light intensity distribution pattern, and the deviation between the working distance Z and the nominal working distance can be determined by comparing them. In this case zones 40a and 40b of the disturbance area 40 do not have to be periodically distributed with period P40, this methodology being able to be applied in embodiments of suitable methods for devices 100 the zones 40a and 40b of which do not define a period P40.

In any of its embodiments, the method can furthermore be adapted for determining the yaw angle β between the first element 1 and the second element 2 (for being implemented in a device 100 such as the device of the second preferred embodiment discussed above, for example). In this case, the method is designed for being implemented in a device 100 comprising at least two absolute tracks arranged in parallel (the case of the second preferred embodiment of the first aspect of the invention) and is adapted for comparing two light intensity distributions generated in the receiving area 21 of the second element 2 of the device 100 from reflecting off two absolute tracks, respectively. If both light intensity distributions coincide, there is no rotation R2 between the two elements 1 and 2 (the yaw angle is equal to zero), whereas if they do not coincide, there is rotation R2 between both elements 1 and 2, and the yaw angle β depends on how much one distribution is displaced with respect to other in the direction of measurement X. Specifically, when one distribution is displaced in one direction, the other distribution is displaced by the same amount in the opposite direction, and the yaw angle β can be determined according to said displacements.

Two absolute position values in the direction of measurement X can be obtained with the control means 3 due to the existence of two absolute tracks 12 and 13. If both absolute position values are the same, the yaw angle β is equal to zero and there is no rotation R2 between elements 1 and 2. If both absolute position values are different, the yaw angle β can be determined by applying, for example, the following equation:

$$C = D*tg\,(\beta). \qquad\qquad [3]$$

wherein:

- C: the difference between the absolute position values associated with the two absolute tracks 12 and 13.
- D: the distance between both absolute tracks 12 and 13 (preferably distance between the centers of both absolute tracks, as shown in Figure 6).
- β: yaw angle.

It must be understood that the device of the invention can incorporate any of the features described in relation to the method, and the method of the invention can likewise incorporate any of the features described in relation to the device.

**Claims**

1. Optoelectronic device for measuring linear displacements, comprising a first element (1), a second element (2) that is linearly displaceable in a direction of measurement (X) with respect to the first element (1), and control means (3) for determining the relative position between both elements (1, 2), the second element (2) comprising emission means (20) for illuminating a specular reflective surface (10) of the first element (1) and a receiving area (21) for receiving at least part of the light reflected off the reflective surface (10), **characterized in that** the device (100) further comprises a window (4) that is arranged in the light path between the emission means (20) and the receiving area (21), and which comprises a disturbance area (40) with successive partial zones (40a, 40b) which have different light transmission properties, the control means (3) being adapted for comparing a light intensity distribution generated in the receiving area (21) from the light emitted for illuminating the reflective surface (10) of the first element (1) and passing through the window (4) with a predetermined light intensity distribution pattern, as well as for determining the pitch angle (α) between both elements (1, 2) according to the result of said comparison.

2. Device according to claim 1, wherein the first element (1) comprises at least one reading track comprising successive partial zones having different specular light reflecting properties distributed in the direction of measurement (X), the read track further performing the function of the specular reflective surface (10).

3. Device according to claim 2, wherein the disturbance area (40) of the window (4) covers part of the length of the window (4), the areas of the window (4) not belonging to the disturbance area (40) allowing the passage of light therethrough.

4. Device according to claim 3, wherein the disturbance area (40) is centered in the direction of measurement (X) in the window (4), said window (4) comprising a transmission area (41) on each side of the disturbance area (40).

5. Device according to any of claims 2 to 4, wherein the first element (1) comprises a first read track that is an incremental track (11) comprising successive partial zones (11a, 11 b) having different light reflecting properties periodically distributed in the direction of measurement (X), and a second read track that is an absolute track (12) comprising successive partial zones (12a, 12b) having different light reflecting properties distributed such that they define a pseudo-random code along the direction of measurement (X) which is parallel to the incremental track (11) in the forward direction (X), the absolute track (12) further performing the function of the specular reflective surface (10).

6. Device according to any of claims 2 to 4, wherein the first element (1) comprises a first read track that is an incremental track (11) comprising successive partial zones (11a, 11 b) having different light reflecting properties periodically distributed in the direction of measurement (X), a second read track that is an absolute track (12) comprising successive partial zones (12a, 12b) having different light reflecting properties distributed such that they define a pseudo-random code along the direction of measurement (X) which is parallel to the incremental track (11) in the forward direction (X), and a third read track that is an additional absolute track (13) parallel to the absolute track (12) and the incremental track (11) in the forward direction and comprising successive partial zones having different light reflecting properties distributed such that they define a pseudo-random code along the direction of measurement (X), the incremental track (11) being arranged between both absolute tracks (12, 13) and one of said absolute tracks (12, 13) further performing the function of the specular reflective surface (10).

7. Device according to claim 6, wherein the control means (3) are adapted for comparing the two light intensity distributions generated in the receiving area (21) with one another after being reflected off the absolute track (12) and the additional absolute track (13) respectively, as well as for determining the yaw angle ($\beta$) between the first element (1) and the second element (2) according to the result of said comparison.

8. Device according to any of the preceding claims, wherein the successive partial zones (40a, 40b) of the disturbance area (40) having different light transmission properties are distributed with a specific period (P40) in the direction of measurement (X).

9. Method for determining at least one angle of rotation for an optoelectronic device for measuring linear displacements, the device (100) comprising a first element (1), a second element (2) that is linearly displaceable in a direction of measurement (X) with respect to the first element (1), and control means (3) for determining the relative position between both elements (1, 2), **characterized in that** in the method a reflective surface (10) of the first element (1) is illuminated from emission means (20) of the second element (2), at least part of the reflected light being received in a receiving area (21) of said second element (2), the light used for illuminating the reflective surface (10) is caused to pass through a window (4) that is arranged in the light path between the emission means (20) and the receiving area (21) and which comprises a disturbance area (40) with successive partial zones (40a, 40b) having different light transmission properties, a resulting light intensity distribution generated in the receiving area (21) from the light illuminating the reflective surface (10) and passing through the window (4) is compared with a predetermined light intensity distribution pattern, and the pitch angle ($\alpha$) between both elements (1, 2) is determined according to the result of said comparison.

10. Method according to claim 9, wherein upon comparing both light intensity distributions with one another, displacement (S) in the direction of measurement (X) of the generated light intensity distribution with respect to the predetermined light intensity distribution pattern is verified, the value of said displacement (S) being related to the pitch angle ($\alpha$).

11. Method according to claim 10, wherein displacement (S) and pitch angle ($\alpha$) are related according to the equation

$$S = Z * tg\,(2\alpha),$$

wherein S is the displacement between both light intensity distributions detected by the control means (3), Z is the working distance between the reflective surface (10) and the receiving area (21), and $\alpha$ is the pitch angle.

12. Method according to any of claims 9 to 11, wherein the partial zones (40a, 40b) of the disturbance area (40) of the window (4) are distributed with a specific period (P40), a segment (T) in the direction of measurement (X) of the light intensity distribution generated from the light passing through the disturbance area (40) of the window (4) comprising a periodic behavior with a specific period ($P_T$) depending on the period (P40) of the partial zones (40a, 40b) of the disturbance area (40), the specific light intensity distribution pattern comprising a segment (T') in the direction of measurement (X) with a periodic behavior of a predetermined period ($P_P$), and the pitch angle ($\alpha$) being determined according to the phase difference (9) detected between the segments (T, T') having periodic behavior of the two compared light intensity distributions.

13. Method according to claim 12, wherein the deviation between a working distance (Z) between the receiving area (21) of the second element (2) and the first element (1) of the device (100) and a nominal working distance between the receiving area (21) of the second element (2) and said first element (1) of the device (100) is determined according to the length of a segment (T') of the light intensity distribution pattern, the length of a segment (T) of the generated light intensity distribution, and the length (T40) of the disturbance area (40) of the window (4).

14. Method according to claim 12, wherein the deviation between a working distance (Z) between the receiving area (21) of the second element (2) and the first element (1) of the device (100) and a nominal working distance between the receiving area (21) of the second element (2) and said first element (1) of the device (100) is determined according to the period ($P_T$) of the periodic behavior of the light intensity distribution in the segment (T) due to the disturbance area (40).

15. Method according to any of claims 9 to 14, wherein the first element (1) of the device (100) further comprises a first absolute track (12) comprising successive partial zones (12a, 12b) having different light transmission properties distributed in the direction of measurement (X), a second additional absolute track (13) parallel to the absolute track (12) in the forward direction (X) and comprising successive partial zones (12a, 12b) having different light transmission properties distributed in the direction of measurement (X), and an incremental track (11) parallel to the absolute track (12) in the forward direction (X) and arranged between both absolute tracks (12, 13), light intensity distributions generated from the reflection of light off both absolute tracks (12, 13) further being compared for determining the yaw angle ($\beta$) between the first element (1) and the second element (2).

**Patentansprüche**

1. Optoelektronische Vorrichtung zur Messung linearer Verschiebungen, umfassend ein erstes Element (1), ein zweites Element (2), das in der Messrichtung (X) relativ zum ersten Element (1) linear verschiebbar ist, sowie Steuermittel (3) zur Bestimmung der relativen Position zwischen den beiden Elementen (1, 2), wobei das zweite Element (2) Emissionsmittel (20) zur Beleuchtung einer spiegelnden reflektierenden Oberfläche (10) des ersten Elements (1) sowie einen Aufnahmebereich (21) zur Aufnahme mindestens eines Teils des von der reflektierenden Oberfläche (10) zurückgestrahlten Lichts (10) umfasst, **dadurch gekennzeichnet, dass** die Vorrichtung (100) ferner ein Fenster (4) umfasst, das im Lichtweg zwischen den Emissionsmitteln (20) und dem Aufnahmebereich (21) angeordnet ist, und das einen Störbereich (40) mit aufeinander folgenden Teilbereichen (40a, 40b) umfasst, die unterschiedliche Lichtdurchlässigkeitseigenschaften aufweisen, wobei die Steuermittel (3) geeignet sind, eine im Aufnahmebereich (21) von dem zur Beleuchtung der reflektierenden Oberfläche (10) des ersten Elements (1) ausgestrahlten, durch das Fenster (4) verlaufende Licht erzeugte Lichtintensitätsverteilung mit einem vorbestimmten Lichtintensitätsverteilungsmuster zu vergleichen, und den Steigungswinkel (a) zwischen den beiden Elementen (1, 2) dem Ergebnis des Vergleichs entsprechend zu bestimmen.

2. Vorrichtung nach Anspruch 1, wobei das erste Element (1) mindestens eine Lesespur umfasst, die aufeinander folgende Teilbereiche mit unterschiedlichen, in Messrichtung (X) verteilten spiegelnden Lichtrückstrahlungseigenschaften umfasst, wobei die Lesespur ferner die Funktion der spiegelnden reflektierenden Oberfläche (10) ausführt.

3. Vorrichtung nach Anspruch 2, wobei der Störbereich (40) des Fensters (4) einen Teil der Länge des Fensters (4) abdeckt, wobei die Bereiche des Fensters (4), die nicht zum Störbereich (40) gehören, lichtdurchlässig sind.

4. Vorrichtung nach Anspruch 3, wobei der Störbereich (40) in Messrichtung (X) im Fenster (4) zentriert ist, wobei das Fenster (4) eine Übertragungsfläche (41) auf jeder Seite des Störbereichs (40) umfasst.

5. Vorrichtung nach einem der Ansprüche 2 - 4, wobei das erste Element (1) eine erste Lesespur umfasst, die eine Inkrementalspur (11) ist, die aufeinander folgende Teilbereiche (11a, 11 b) mit unterschiedlichen Lichtrückstrahlungseigenschaften umfasst, die in Messrichtung (X) periodisch verteilt sind, und eine zweite Lesespur umfasst, die eine absolute Spur (12) ist, umfassend aufeinander folgende Teilbereiche (12a, 12b) mit unterschiedlichen Lichtrückstrahlungseigenschaften, die derart verteilt sind, dass sie einen pseudozufälligen Code entlang der Messrichtung (X) definieren, die parallel zur Inkrementalspur (11) in Vorwärtsrichtung (X) verläuft, wobei die absolute Spur (12) ferner die Funktion der spiegelnden reflektierenden Oberfläche (10) ausführt.

6. Vorrichtung nach einem der Ansprüche 2 - 4, wobei das erste Element (1) eine erste Lesespur umfasst, die eine Inkrementalspur (11) ist, die aufeinander folgende Teilbereiche (11a, 11 b) mit unterschiedlichen Lichtrückstrahlungseigenschaften umfasst, die in Messrichtung (X) periodisch verteilt sind, eine zweite Lesespur umfasst, die eine absolute Spur (12) ist, umfassend aufeinander folgende Teilbereiche (12a, 12b) mit unterschiedlichen Lichtrückstrahlungseigenschaften, die derart verteilt sind, dass sie einen pseudozufälligen Code entlang der Messrichtung (X) definieren, die parallel zur Inkrementalspur (11) in Vorwärtsrichtung (X) verläuft, und eine dritte Lesespur umfasst, die eine zusätzliche absolute Spur (13), die parallel zur absoluten Spur (12) und zur Inkrementalspur (11) in Vorwärtsrichtung verläuft und aufeinander folgende Teilbereiche mit unterschiedlichen Lichtrückstrahlungseigenschaften umfasst, die derart verteilt sind, dass sie entlang der Messrichtung (X) einen pseudozufälligen Code definieren, wobei die Inkrementalspur (11) zwischen den beiden absoluten Spuren (12, 13) angeordnet ist, und eine der absoluten Spuren (12, 13) ferner die Funktion der spiegelnden reflektierenden Oberfläche (10) ausführt.

7. Vorrichtung nach Anspruch 6, wobei die Steuermittel (3) geeignet sind, die im Aufnahmebereich (21) erzeugten zwei Lichtintensitätsverteilungen miteinander zu vergleichen, nachdem sie von der absoluten Spur (12) bzw. der zusätzlichen absoluten Spur (13) zurückgestrahlt worden sind, und den Kieferwinkel ($\beta$) zwischen dem ersten Element (1) und dem zweiten Element (2) dem Ergebnis des Vergleichs entsprechend zu bestimmen.

8. Vorrichtung nach einem der vorstehenden Ansprüche, wobei die aufeinander folgenden Teilbereiche (40a, 40b) des Störbereichs (40) mit unterschiedlichen Lichtdurchlässigkeitseigenschaften mit einer bestimmten Periode (P40) in Messrichtung (X) verteilt sind.

9. Vorrichtung zur Bestimmung mindestens eines Rotationswinkels einer optoelektronischen Vorrichtung zur Messung linearer Verschiebungen, wobei die Vorrichtung (100) ein erstes Element (1), ein zweites Element (2), das in der Messrichtung (X) relativ zum ersten Element (1) linear verschiebbar ist, sowie Steuermittel (3) zur Bestimmung der relativen Position zwischen den beiden Elementen (1, 2) umfasst, **dadurch gekennzeichnet, dass** im Verfahren eine reflektierende Oberfläche (10) des ersten Elements (1) von Emissionsmitteln (20) des zweiten Elements (2) beleuchtet wird, wobei mindestens ein Teil des zurückgestrahlten Lichts in einem Aufnahmebereich (21) des zweiten Elements (2) aufgenommen wird, wobei das zur Beleuchtung der reflektierenden Oberfläche (10) verwendete Licht (10) dazu gebracht wird, durch ein im Lichtweg zwischen den Emissionsmitteln (20) und dem Aufnahmebereich (21) angeordnetes Fenster zu verlaufen, das einen Störbereich (40) mit aufeinanderfolgenden Teilbereichen (40a, 40b) mit unterschiedlichen Lichtdurchlässigkeitseigenschaften umfasst, wobei eine resultierende Lichtintensitätsverteilung, die im Aufnahmebereich (21) von dem Licht erzeugt wird, das die reflektierende Oberfläche (10) beleuchtet und durch das Fenster (4) verläuft, mit einem vorbestimmten Lichtintensitätsverteilungsmuster verglichen wird, und der Steigungswinkel ($\alpha$) zwischen den beiden Elementen (1, 2) dem Ergebnis des Vergleichs entsprechend bestimmt wird.

10. Verfahren nach Anspruch 9, wobei beim Vergleichen der beiden Lichtintensitätsverteilungen miteinander, die Verschiebung (S) der erzeugten Lichtintensitätsverteilung in Messrichtung (X) gegenüber dem vorbestimmten Lichtintensitätsverteilungsmuster verifiziert wird, wobei der Wert der Verschiebung (S) mit dem Steigungswinkel ($\alpha$) zusammenhängt.

11. Verfahren nach Anspruch 10, wobei die Verschiebung (S) und der Steigungswinkel ($\alpha$) im Verhältnis nach der Gleichung

$$S = Z * tg\,(2\alpha)$$

zueinander stehen,
wobei S die Verschiebung zwischen den beiden von den Steuermitteln (3) erkannten Lichtintensitätsverteilungen ist, Z der Arbeitsabstand zwischen der reflektierenden Oberfläche (10) und dem Aufnahmebereich (21) ist und $\alpha$ der Steigungswinkel ist.

**12.** Verfahren nach einem der Ansprüche 9 - 11, wobei die Teilbereiche (40a, 40b) des Störbereichs (40) des Fensters (4) mit einer bestimmten Periode (P40) verteilt sind, wobei ein Segment (T) in Messrichtung (X) der Lichtintensitätsverteilung, die durch das durch den Störbereich (40) des Fensters (4) verlaufende Licht erzeugt wird, ein periodisches Verhalten mit einer bestimmten Periode ($P_T$) umfasst, die von der Periode (P40) der Teilbereiche (40a, 40b) des Störbereichs (40) abhängt, wobei das bestimmte Lichtintensitätsverteilungsmuster ein Segment (T') in Messrichtung (X) mit einem periodischen Verhalten einer vorbestimmten Periode ($P_P$) umfasst, und wobei sich der Steigungswinkel ($\alpha$) nach dem zwischen den Segmenten (T, T') erkannten Phasenunterschied (9) mit einem periodischen Verhalten der beiden verglichenen Lichtintensitätsverteilungen bestimmt.

**13.** Verfahren nach Anspruch 12, wobei die Abweichung zwischen einem Arbeitsabstand (Z) zwischen dem Aufnahmebereich (21) des zweiten Elements (2) und dem ersten Element (1) der Vorrichtung (100) und einem Nenn-Arbeitsabstand zwischen dem Aufnahmebereich (21) des zweiten Elements (2) und dem ersten Element (1) der Vorrichtung (100) sich nach der Länge eines Segments (T') des Lichtintensitätsverteilungsmusters, der Länge eines Segments (T) der erzeugten Lichtintensitätsverteilung und der Länge (T40) des Störbereichs (40) des Fensters (4) bestimmt.

**14.** Verfahren nach Anspruch 12, wobei die Abweichung zwischen einem Arbeitsabstand (Z) zwischen dem Aufnahmebereich (21) des zweiten Elements (2) und dem ersten Element (1) der Vorrichtung (100) und einem Nenn-Arbeitsabstand zwischen dem Aufnahmebereich (21) des zweiten Elements (2) und dem ersten Element (1) der Vorrichtung (100) sich nach der Periode ($P_T$) des periodischen Verhaltens der Lichtintensitätsverteilung im Segment (T) infolge des Störbereichs (40) bestimmt.

**15.** Verfahren nach einem der Ansprüche 9 - 14, wobei das erste Element (1) der Vorrichtung (100) ferner eine erste absolute Spur (12), die aufeinander folgende Teilbereiche (12a, 12b) mit unterschiedlichen Lichtdurchlässigkeitseigenschaften umfasst, die in Messrichtung (X) verteilt sind, umfasst, eine zweite zusätzliche absolute Spur (13) umfasst, die in Vorwärtsrichtung (X) parallel zur absoluten Spur (12) verläuft und aufeinanderfolgende Teilbereiche (12a, 12b) mit unterschiedlichen Lichtdurchlässigkeitseigenschaften umfasst, die in Messrichtung (X) verteilt sind, und eine parallel zur absoluten Spur (12) in Vorwärtsrichtung (X) verlaufende Inkrementalspur (11) umfasst, die zwischen den beiden absoluten Spuren (12, 13) angeordnet ist, wobei die von der Rückstrahlung von Licht von den beiden absoluten Spuren (12, 13) erzeugten Lichtintensitätsverteilungen ferner verglichen werden, um den Kieferwinkel (3) zwischen dem ersten Element (1) und dem zweiten Element (2) zu bestimmen.

## Revendications

**1.** Dispositif optoélectronique pour la mesure de déplacements linéaires, comprenant un premier élément (1), un deuxième élément (2), qui peut être déplacé linéairement dans une direction de mesure (X) par rapport au premier élément (1) et un moyen de contrôle (3) pour la détermination de la position relative entre les deux éléments (1, 2), le deuxième élément (2) comprenant un moyen d'émission (20) pour éclairer une surface réfléchissante spéculaire (10) du premier élément (1) et une zone de réception (21) recevoir au moins une partie de la lumière réfléchie sur la surface réfléchissante (10), **caractérisé en ce que** le dispositif (100) comprend en outre une fenêtre (4) qui est disposé dans le trajet lumineux entre le moyen d'émission (20) et la zone de réception (21) et qui comprend une zone de perturbation (40) avec des zones partielles successives (40a, 40b) qui présentent des propriétés de transmission de lumière différentes, les moyens de contrôle (3) étant conçus pour comparer une distribution d'intensité lumineuse générée dans la zone de réception (21) à partir de la lumière émise pour l'éclairage de la surface réfléchissante (10) du premier élément (1) et passer à travers la fenêtre (4) avec un motif de distribution d'intensité lumineuse prédéterminé, ainsi que pour déterminer l'angle de tangage ($\alpha$) entre les deux éléments (1, 2) selon le résultat de ladite comparaison.

**2.** Dispositif selon la revendication 1, dans lequel le premier élément (1) comprend au moins une piste de lecture comprenant des zones partielles successives ayant des propriétés réfléchissantes spéculaires différentes réparties dans la direction de mesure (X), la piste de lecture remplissant en outre la fonction de la surface réfléchissante spéculaire (10).

**3.** Dispositif selon la revendication 2, dans lequel la zone de perturbation (40) de la fenêtre (4) couvre une partie de la longueur de la fenêtre (4), les zones de la fenêtre (4) n'appartenant à la zone de perturbation (40) permettant le passage de lumière à travers.

**4.** Dispositif selon la revendication 2, dans lequel la zone de perturbation (40) est centrée dans la direction de mesure (X) dans la fenêtre (4), ladite fenêtre (4) comprenant une zone de transmission (41) sur chaque côté de la zone de perturbation (40).

**5.** Dispositif selon l'une des revendications 2 à 4, dans lequel le premier élément (1) comprend une première piste de lecture qui est piste incrémentale (11) comprenant des zones partielles successives (11 a, 11 b) ayant des propriétés réfléchissantes spéculaires différentes réparties périodiquement dans la direction de mesure (X), et une deuxième piste de lecture qui est une piste absolue (12) comprenant des zones partielles successives (12a, 12b) ayant des propriétés réfléchissantes spéculaires différentes distribuées de façon à définir un code pseudo-aléatoire le long de la direction de mesure (X) qui est parallèle à la piste incrémentale (11) vers l'avant (X), la piste absolue (12) remplissant en outre la fonction de la surface réfléchissante spéculaire (10).

**6.** Dispositif selon l'une des revendications 2 à 4, dans lequel le premier élément (1) comprend une première piste de lecture qui est une piste incrémentale (11) comprenant des zones partielles successives (11 a, 11 b) ayant des propriétés réfléchissantes spéculaires réparties périodiquement dans la direction de mesure (X), une deuxième piste de lecture qui est une piste absolue (12) comprenant des zones partielles successives (12a, 12b) ayant des propriétés réfléchissantes différentes réparties de façon à définir un code pseudo-aléatoire le long de la direction de mesure (X) qui est parallèle à la piste incrémentale (11) vers l'avant (X), et une troisième piste de lecture qui est une piste absolue supplémentaire (13) parallèle à la piste absolue (12) et à la piste incrémentale (11) vers l'avant et comprenant des zones partielles successives ayant des propriétés réfléchissantes différentes réparties de façon à définir un code pseudo-aléatoire le long de la direction de mesure (X), la piste incrémentale (11) étant disposée entre les deux pistes absolues (12, 13) et une desdites pistes absolues (12, 13) remplissant en outre la fonction de la surface réfléchissante spéculaire (10).

**7.** Dispositif selon la revendication 6, dans lequel les moyens de contrôle (3) sont conçus pour comparer les deux distributions d'intensité lumineuse générées dans la zone de réception (21) l'une avec l'autre après avoir été réfléchies respectivement par la piste absolue (12) et la piste absolue supplémentaire (13), ainsi que pour déterminer l'angle de lacet ($\beta$) entre le premier élément (1) et le deuxième élément (2) selon le résultat de ladite comparaison.

**8.** Dispositif selon l'une des revendications précédentes, dans lequel les zones partielles successives (40a, 40b) de la zone de perturbation (40) ayant des propriétés de transmission de lumière différentes sont réparties avec une période spécifique (P40) dans la direction de la mesure (X).

**9.** Procédé pour déterminer au moins un angle de rotation pour un dispositif optoélectronique pour la mesure de déplacements linéaires, le dispositif (100) comprenant un premier élément (1), un deuxième élément (2), qui peut être déplacé linéairement dans une direction de mesure (X) par rapport au premier élément (1) et des moyens de contrôle (3) pour déterminer la position relative entre les deux éléments (1, 2), **caractérisé en ce que**, dans le procédé, une surface réfléchissante (10) du premier élément (1) est éclairée à partir de moyens d'émissions (20) du deuxième élément (2), au moins une partie de la lumière réfléchie étant reçue dans une zone de réception (21) dudit deuxième élément (2), la lumière utilisée pour l'éclairage de la surface réfléchissante (10) passe à travers une fenêtre (4) qui est disposée dans le trajet lumineux entre les moyens d'émission (20) et les la zone de réception (21) et qui comprend une zone de perturbation (40) avec des zones partielles successives (40a, 40b) ayant des propriétés de transmission de lumière différentes, une distribution d'intensité lumineuse résultante générée dans la zone de réception (21) à partir de la lumière éclairant la surface réfléchissante (10) et passant à travers la fenêtre (4) est comparée à un motif de distribution d'intensité lumineuse prédéterminée et l'angle de tangage ($\alpha$) entre les deux éléments (1, 2) est prédéterminé selon le résultat de ladite comparaison.

**10.** Procédé selon la revendication 9, dans lequel, lors de la comparaison des distributions d'intensité lumineuse entre elles, un déplacement (S) dans la direction de mesure (X) de la distribution d'intensité lumineuse générée par rapport au motif de distribution d'intensité lumineuse prédéterminé est vérifié, la valeur dudit déplacement (S) étant lié à l'angle de tangage ($\alpha$).

**11.** Procédé selon al revendication 10, dans lequel le déplacement (S) et l'angle de tangage ($\alpha$) sont liés selon l'équation :

$$S = Z \cdot tg(2\alpha),$$

dans laquelle S est le déplacement entre les deux distributions d'intensité lumineuse détecté par les moyens de contrôle (3), Z est la distance de travail entre la surface réfléchissante (10) et la zone de réception (21) et $\alpha$ est l'angle de tangage.

12. Procédé selon l'une des revendications 9 à 11, dans lequel les zones partielles (40a, 40b) de la zone de perturbation (40) de la fenêtre (4) sont réparties avec une période spécifique (P40), un segment (T) dans la direction de mesure (X) de la distribution d'intensité lumineuse générée à partir de la lumière passant à travers la zone de perturbation (40) de la fenêtre (4) présentant un comportement périodique avec une période spécifique ($P_T$) qui dépend de la période (P40) des zones partielles (40a, 40b) de la zone de perturbation (40) le motif de distribution d'intensité lumineuse comprenant un segment (T') dans la direction de mesure (X) avec un comportement périodique d'une période prédéterminée ($P_P$) et l'angle de tangage ($\alpha$) étant déterminé en fonction de la différence de phase (9) détectée entre les segments (T, T') ayant le comportement périodique des deux distributions d'intensité lumineuse comparées.

13. Procédé selon la revendication 12, dans lequel l'écart entre une distance de travail (Z) entre la zone de réception (21) du deuxième élément (2) et le premier élément (1) du dispositif (100) et une distance de travail nominale entre la zone de réception (21) du deuxième élément (2) et ledit premier élément (1) du dispositif (100) est déterminé en fonction de la longueur d'un segment (T') du motif de distribution d'intensité lumineuse, de la longueur d'un segment (T) de la distribution d'intensité lumineuse générée et de la longueur (T40) de la zone de perturbation (40) de la fenêtre (4).

14. Procédé selon la revendication 12, dans lequel l'écart entre une distance de travail (Z) entre la zone de réception (21) du deuxième élément (2) et du premier élément (1) du dispositif (100) et une distance de travail nominale entre la zone de réception (21) du deuxième élément (2) et ledit premier élément (1) du dispositif (100) est déterminé en fonction de la période ($P_T$) du comportement périodique de la distribution d'intensité lumineuse dans le segment (T) dû à la zone de perturbation (40).

15. Procédé selon l'une des revendications 9 à 14, dans lequel le premier élément (1) du dispositif (100) comprend en outre une première piste absolue (12) comprenant des zones partielles successives (12a, 12b) ayant des propriétés de transmission de lumière différentes dans la direction de mesure (X), une deuxième piste absolue supplémentaire (13) parallèle à la piste absolue (12) vers l'avant (X) et comprenant des zones partielles successives (12a, 12b) ayant des propriétés de transmission de lumière différentes réparties dans la direction de mesure (X) et une piste incrémentale (11) parallèle à la piste absolue (12) vers l'avant (X) et disposée entre les deux pistes absolues (12, 13), les distributions d'intensité lumineuse générées à partir de la réflexion de lumière par les deux pistes absolues (12, 13) étant en outre comparées pour déterminer l'angle de lacet ($\beta$) entre le premier élément (1) et le deuxième élément (2).

Fig. 1

Fig. 2

Fig. 3

Fig. 4

Fig. 5

Fig. 6

Fig. 7

Fig. 8

Fig. 9a

Fig. 9b

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1775558 A1
- EP 2199752 A1
- EP 1271107 A1